# EUROPÄISCHE PATENTSCHRIFT

(11) **EP 3 478 442 B1**
(45) Veröffentlichungstag und Bekanntmachung des Hinweises auf die Patenterteilung: **05.08.2020**
(21) Anmeldenummer: 17732360.7
(22) Anmeldetag: 14.06.2017
(51) Int. Cl.: B23K 26/03, B23K 26/342

(54) **VORRICHTUNG ZUR PROZESSÜBERWACHUNG BEI EINEM AUFTRAGSCHWEISS-VERFAHREN**
DEVICE FOR MONITORING A BUILD-UP WELDING PROCESS
DISPOSITF DE SURVEILLANCE D'UN PROCÉDÉ DE SOUDAGE PAR RECHARGEMENT

(30) Priorität: 30.06.2016 DE 102016211935
(43) Veröffentlichungstag der Anmeldung: 08.05.2019
(73) Patentinhaber: Sauer GmbH, 55758 Stipshausen (DE)
(72) Erfinder: PERFAHL, Holger, 89555 Steinheim (DE); KLEDWIG, Christian, 87439 Kempten (DE)
(74) Vertreter: MERH-IP Matias Erny Reichl Hoffmann Patentanwälte PartG mbB
(86) Internationale Anmeldenummer: PCT/EP2017/064523
(87) Internationale Veröffentlichungsnummer: WO 2018/001737

(56) Entgegenhaltungen:
- WO-A1-2016/032953
- DE-A1-102007 032 190
- DE-A1-102007 056 984

## Beschreibung

Die Erfindung betrifft eine Vorrichtung zur Prozessüberwachung bei einem Auftragschweiß-Verfahren nach dem Oberbegriff des Anspruchs 1 und ein Verfahren zur Prozessüberwachung bei einem Auftragschweiß-Verfahren nach dem Oberbegriff des Anspruchs 5.

Im Bereich der Additiven Fertigung von einzelnen Schichten bis hin zu 3D-Strukturen wird unter anderem das Laser-Pulver-Auftragschweißen genutzt, was zu den Fertigungsverfahren des Auftragschweißens (oder auch Cladding genannt) gehört. Dabei erfolgt auf einem Werkstück unter Anwendung von lokaler Hitzeeinwirkung ein Aufschmelzen der Werkstückoberfläche bei gleichzeitigem Aufbringen eines nahezu beliebigen metallischen Werkstoffs in Pulverform. Ein leistungsstarker Dioden-Laser oder Faserlaser wird dabei heutzutage vorrangig als Wärmequelle genutzt.

Um die gewünschte Qualität und Oberflächeneigenschaft zu erhalten ist eine ständige Prozessüberwachung erforderlich. Mit einem Kamerasystem, das optisch auf den Punkt des Aufschmelzens gerichtet ist, kann ein Bild des zu überwachenden Bereiches erzeugt werden. Dabei werden in der Regel der Fälle Temperaturwerte und Temperaturintensitäten vom Punkt des Aufschmelzens erzeugt, die später für das Überwachen und Steuern des Prozesses genutzt werden können.

Aus der DE 10 2007 032 190 A1 ist eine Vorrichtung zur Durchführung der Behandlung der Oberfläche eines Werkstücks unter Hitzeanwendung bekannt. Dabei wird der Wirkbereich der Bearbeitung in Bildsignale umgewandelt und im weiteren Verlauf zu Stellsignalen verarbeitet, um die Hitzewirkung an der Oberfläche des Werkstücks in Abhängigkeit vom Zustand des Wirkbereiches der Hitze zu steuern. Die Stellsignale bewirken das Betätigen eines oder mehrerer Stellglieder zum Verändern der Wärmewirkung. Dabei wird für die Verarbeitung der Bildsignale ein pixelweises Analysieren angewendet, bei dem anhand von Graustufengradienten ein Bild entsteht, das in eine Hitzezone mit hoher Wärme und eine Hitzezone mit niedrigerer Wärme unterteilt wird. Die Auswertung über den Verlauf und Güte des Prozesses erfolgt dabei lediglich aufgrund des pixelweisen Vergleichens der Flächengrößen dieser beiden Hitzezonen miteinander.

Aus der DE 10 2004 051 876 A1 ist eine Anordnung zur ortsaufgelösten Temperaturmessung bei einem Laserbearbeitungsverfahren bekannt. Dabei kann ein vorgebbarer Bearbeitungsbereich eines Werkstückes auf einen ortsaufgelöst messenden optischen Detektor abgebildet werden. Weiterhin ist im Strahlengang zwischen dem Bearbeitungsbereich und dem optischen Detektor ein optischer Filter angeordnet, der die elektromagnetische Strahlung eines oder mehrerer Laserbearbeitungsstrahls/-strahlen sperrt. Das aufgenommene Bild des Detektors kann unter anderem für die Bestimmung der Temperaturverteilung des Bearbeitungsbereiches verwendet werden. Für die Auswertung des aufgenommenen Bildes werden lediglich die Form und die Position eines Bereiches herangezogen, der einen vorgegebenen maximalen Temperaturwert übersteigt.

Die US 2008/0296270 A1 offenbart eine Echtzeit-Steuerung eines Auftragschweiß-Prozesses, bei dem die Temperatur durch Pyrometer und die Form des Schmelzbades durch eine Kamera überwacht werden.

Aus der US 6,423,926 B1 ist ein Verfahren bekannt, bei dem mittels Thermoelementen, die in einem Prozesskopf angeordnet sind, die Temperatur einer Düse bei einem Laser-Auftragschweißverfahren überwacht wird.

Die US 6,940,037 B1 offenbart eine Steuerung für einen Auftragschweiß-Prozess, bei dem die Schweißparameter anhand von Auftragpunkten und der Bestimmung eines geometrischen Faktors nachgeregelt werden.

Die EP 1 600 247 A2 zeigt eine Vorrichtung zur Überwachung einer Düse einer Laserstrahl-Maschine, wobei die Vorrichtung zur Überwachung getrennt von einem Prozesskopf angeordnet ist und eine CCD-Kamera zur optischen Überwachung einer Düse einsetzt.

Aus der US 2004/0133298 A1 ist eine Vorrichtung bekannt, die bei einem Laser-Auftragschweißverfahren den Auftragprozess durch die optische Erfassung der Rauheit, der Auftrag-Dimensionen und der Aushärte-Geschwindigkeit des aufgetragenen Materials steuert.

Die Aufgabe der Erfindung ist es, eine Vorrichtung bereit zu stellen, bei der die Prozessüberwachung bei einem Auftragschweiß-Verfahren weiter optimiert wird und Prozessschwankungen, die sich auf die Qualität eines Erzeugnisses auswirken können, zuverlässig vermieden werden.

Die Aufgabe wird mit einer Vorrichtung zur Prozessüberwachung bei einem Auftragschweiß-Verfahren gemäß Anspruch 1 und mit einem Verfahren zur Prozessüberwachung bei einem Auftragschweiß-Verfahren gemäß Anspruch 5 gelöst.

Vorteilhafte Ausgestaltungsformen und Weiterbildungen der Erfindung können mit den in den Unteransprüchen bezeichneten Merkmalen erreicht werden.

Die erfindungsgemäße Vorrichtung zur Prozessüberwachung bei einem Auftragschweiß-Verfahren weist einen optischen Detektor auf, der optisch in einem Strahlengang eines Laserstrahls eingebunden ist, wobei der Laserstrahl zum Aufschmelzen von aufzutragendem Material von einer Laserstrahl-Quelle gerichtet ausgesendet, über ein optisches System auf ein Werkstück gelenkt und dabei auf eine zu bearbeitende Oberfläche des Werkstücks fokussiert wird, und das optische System dazu eingerichtet ist, ein von der Temperatur des Werkstücks und der Düsengeometrie abhängiges Detektorsignal in entgegengesetzter Richtung zum Laserstrahl an den optischen Detektor zu senden, das von dem optischen Detektor aufgenommen und in ein elektrisches Detektorsignal umgewandelt wird, weist eine Umwandlungseinheit auf, die das elektrische Detektorsignal in ein Bild umwandelt, das eine temperaturabhängige Intensitätsverteilung des von dem optischen Detektor aufgenommenen Detektorsignals wiedergibt, und weist eine Auswerteeinheit auf, die eingerichtet ist, das Bild weiter zu verarbeiten, wobei die Auswerteeinheit dafür ferner folgendes aufweist: eine Einrichtung zum Festlegen eines Überwachungsbereiches des Bildes, eine Einrichtung zum wiederholten Erfassen eines Flächenbereiches des Überwachungsbereiches, in dem die Intensität einen vorgegebenen minimalen Wert überschreitet, eine Einrichtung zum Erfassen einer Zeitspanne, während derer der erfasste Flächenbereich über einem vorgegebenen Mindestwert liegt, und eine Einrichtung zum Abbrechen des Prozesses des Auftragschweißens, falls die Zeitspanne des erfassten Flächenbereiches über einem vorgegebenen Zeitwert liegt.

Überraschenderweise können die eingangs beschriebenen und aus dem Stand der Technik bekannten Vorrichtungen zur Prozessüberwachung beim Auftragschweißen zu einer wesentlich optimierten Prozessüberwachung fortgebildet werden, in dem diese durch eine Einrichtung zum Erfassen einer Zeitspanne, während derer der erfasste Flächenbereich über einem vorgegebenen Mindestwert liegt, und eine Einrichtung zum automatisierten Abbrechen des Prozesses des Auftragschweißens, falls die Zeitspanne des erfassten Flächenbereiches über einem vorgegebenen Zeitwert liegt, ergänzt werden.

Dies beruht auf dem Umstand, dass die Erfinder erkannt haben, dass auf diese Weise eine Vorrichtung geschaffen werden kann, die es ermöglicht, Düsenanhaftungen aus dem Auftragschweiß-Prozess zuverlässig und zeitnah während ihrer Entstehung zu detektieren.

Derartige Anhaftungen können entstehen, wenn beim Auftragschweiß-Prozess Pulver bereits an der Austrittsöffnung einer Düse für die Zufuhr des Pulvers beginnt zu schmelzen und über die Zeit hinweg sich in Richtung der Durchgangsöffnung des Laserstrahls ausbreitet und diese begrenzt oder eingeschlossene Gasbläschen im Werkstück frei werden und dadurch auf dem Werkstück aufgeschmolzenes Material wegspritzt wird und sich am Rand der Durchgangsöffnung des Laserstrahls anhaftet. Das Problem bei solchen Anhaftungen ist, dass es beim Hineinragen in den Durchgang des Laserstrahls zum Begrenzen des Laserstrahls (also weniger Energieeintrag auf dem Werkstück als vorgesehen) oder zur Reflektion von diesem innerhalb der Düse kommt, was wiederum ein überhöhtes Erhitzen der Düse zur Folge haben kann. Zusätzlich kann sich die Anhaftung an der Austrittsöffnung des pulverförmigen Materials der Düse ausbilden und die Fokussierung des pulverförmigen Materials nachhaltig beeinflussen.

Um eine mögliche Störung der Fokussierung des Pulverkegels so früh wie möglich zu erkennen, ist eine fortwährende Prozessüberwachung notwendig. Sie gestattet die zeitnahe Detektion jeder noch so kleinen Änderung bezüglich der Anhaftung von aufgeschmolzenem Material, was die Qualität des Erzeugnisses signifikant stabilisiert.

Die Erfindung schafft dabei eine Vorrichtung mittels derer derartige Anhaftungen zuverlässig detektiert werden können und die des Weiteren sicherstellt, dass bei der Detektion einer fortwährend anhafteten Verschmutzung an der Düsenöffnung der Prozess automatisch beendet wird.

Die erfindungsgemäße Vorrichtung kann vorteilhaft so weitergebildet werden, dass der Überwachungsbereich ein ringförmiger Randbereich entlang des Innenumfangs der Düsenöffnung u (Düsenrand) ist, was besonders vorteilhaft für die Detektion von Anhaftungen, die sich typischerweise am Düsenrand bilden.

Dadurch kann sichergestellt werden, dass Düsenanhaftungen, die sich am Rand der Düse ausbilden können, zuverlässig von der Vorrichtung detektiert werden.

Die erfindungsgemäße Vorrichtung kann vorteilhaft so weitergebildet werden, dass die Einrichtung zum Abbrechen des Prozesses des Auftragschweißens eingerichtet ist, um den Prozess des Auftragschweißens automatisiert abzubrechen, falls die Zeitspanne des erfassten Flächenbereiches über einem vorgegebenen Zeitwert liegt.

Durch einen automatisierten Prozess kann sehr schnell auf etwaige Veränderungen im Überwachungsbereich reagiert werden und gegebenenfalls der Prozess rechtzeitig gestoppt werden, falls die optische Detektion der Anhaftungen die vorher festgelegten Grenzwerte überschreitet. Dies erhöht die Sicherheit des Prozessablaufes.

Die erfindungsgemäße Vorrichtung kann zudem vorteilhaft so weitergebildet werden, dass das aufzutragende Material über die Düse fokussierend auf die zu bearbeitende Oberfläche des Werkstücks geleitet wird.

Hierdurch kann das Material, was auf das Werkstück aufgetragen werden soll, punktuell in den Fokus des Laserstrahls geleitet werden, wo es sich mit dem bereits aufgeschmolzenem Grundmaterial des Werkstücks verbindet. Weiterhin ist eine solch fokussierte Zufuhr vorteilhaft, da mit erhöhter Fokussierung des pulverförmigen Materials immer kleinere Strukturen erzeugt werden können.

Die erfindungsgemäße Vorrichtung kann vorteilhaft so weitergebildet werden, dass der Laserstrahl durch einen mittleren Bereich der Düse hindurch auf die zu bearbeitende Oberfläche des Werkstücks gelenkt wird.

Der Vorteil dieser Weiterbildung liegt darin, dass der Laserstrahl innerhalb des Kegels liegt, der aus der Zufuhr des aufzutragenden, pulverförmigen Materials entsteht, und so der Materialkegel und der Laserstrahl nah beieinander liegen können. Das hat den Vorteil, dass der Prozesskopf, der über das Werkstück bewegt wird und das Material auf dieses aufträgt, relativ kompakt sein kann, was besonders für die Erzeugung von Strukturen in schwer zugänglichen Bereichen des Werkstücks von Vorteil ist.

Die erfindungsgemäße Vorrichtung kann vorteilhaft so weitergebildet werden, dass die Vorrichtung so eingerichtet ist, dass eine Mindestgröße des Überwachungsbereiches 20%, bevorzugt mindestens 30%, besonders bevorzugt mindestens 40%, jedoch höchstens 70% relativ zu einem Gesamtbereich, bestehend aus dem Überwachungsbereich und dem Prozessbereich, beträgt.

Ferner ist die Vorrichtung besonders vorteilhaft so eingerichtet, dass der vorgegebene Mindestwert für das Erfassen einer Zeitspanne 10%, bevorzugt 15%, besonders bevorzugt 20% relativ zu dem Bereich des Überwachungsbereiches beträgt.

Hierdurch können unterschiedliche Geometrien der Düse berücksichtigt werden und die Vorrichtung auf die jeweiligen Prozessparameter und Anforderungen (wie Qualität der Schweißung, etc.) an das Auftragschweißen angepasst werden.

Die Erfindung umfasst auch ein erfindungsgemäßes Verfahren zur Prozessüberwachung bei einem Auftragschweiß-Verfahren, unter Verwendung eines optischen Gesamtsystems mit einem optischen Detektor, der optisch in einem Strahlengang eines Laserstrahls eingebunden ist, und einer Laserstrahl-Quelle, die den Laserstrahl zum Aufschmelzen von aufzutragendem Material von einer Laserstrahl-Quelle gerichtet aussendet, über ein optisches System auf ein Werkstück lenkt und dabei auf eine zu bearbeitende Oberfläche des Werkstücks fokussiert, und das optische System dazu eingerichtet ist, ein von der Temperatur des Werkstücks und der Düsengeometrie abhängiges Detektorsignal in entgegengesetzter Richtung zum Laserstrahl an den optischen Detektor zu senden, das von dem optischen Detektor aufgenommen und in ein elektrisches Detektorsignal umgewandelt wird, und einer Umwandlungseinheit, die das elektrische Detektorsignal in ein Bild umwandelt, das eine temperaturabhängige Intensitätsverteilung des von dem optischen Detektor aufgenommenen Detektorsignals wiedergibt, wobei das Verfahren folgende Schritte aufweist: Festlegen eines Überwachungsbereiches des Bildes, wiederholtes Erfassen eines Flächenbereiches des Überwachungsbereiches, in dem die Intensität einen vorgegebenen minimalen Wert überschreitet, Erfassen einer Zeitspanne, während derer der erfasste Flächenbereich über einem vorgegebenen Mindestwert liegt, und Abbrechen des Prozesses des Auftragschweißens, falls die Zeitspanne des erfassten Flächenbereiches über einem vorgegebenen Zeitwert liegt.

Die Erfindung teilt das aufgenommene Bild der Intensitäten des Bearbeitungsbereiches so in eine Vielzahl von Bereichen ein, dass mindestens ein Bereich für die Überwachung der Düsenanhaftung geeignet ist, und überwacht die vorher festgelegten Grenzwerte für Flächengröße, Intensität und Zeit des Bestehens der Flächengröße. Werden diese Grenzwerte in einer bestimmten Reihenfolge überschritten, kommt es zum Prozessabbruch.

Das erfindungsgemäße Verfahren kann vorteilhaft so weitergebildet werden, dass der Überwachungsbereich als ein ringförmiger Randbereich um den Prozessbereich (Düsenrand) herum für die Detektion von Anhaftungen festgelegt wird.

Dadurch kann sichergestellt werden, dass Düsenanhaftungen, die sich am Rand der Düse ausbilden können, zuverlässig vom Verfahren detektiert werden.

Das erfindungsgemäße Verfahren kann vorteilhaft so weitergebildet werden, dass die Zeitspanne vorzugsweise 1 Sekunde, 3 Sekunden, oder besonders bevorzugt 5 Sekunden beträgt.

Damit kann der Prozessüberwachung genügend Zeit gegeben werden, um auf Veränderungen innerhalb des Bildes des Überwachungsbereiches zu reagieren. Dabei ist es von großer Wichtigkeit, die Zeit so zu wählen, dass der Prozess nicht zu schnell abgebrochen wird, da es sich bei den Veränderungen im Bild des Überwachungsbereiches auch nur um sehr kurzfristige Änderungen handeln kann. Dies würde wiederum nicht zwingend auf eine Anhaftung am Düsenrand hinweisen und der Prozess könnte weitergeführt werden.

Das erfindungsgemäße Verfahren kann vorteilhaft so weitergebildet werden, dass eine Mindestgröße des Überwachungsbereiches mindestens 20%, bevorzugt mindestens 30%, besonders bevorzugt mindestens 40%, jedoch höchstens 70% relativ zu dem Gesamtbereich, bestehend aus dem Überwachungsbereich und dem Prozessbereich, beträgt.

Hierdurch können unterschiedliche Formen und Durchmesser der Öffnung der Düse berücksichtigt werden ebenso wie weitere Faktoren, die für die Bildverarbeitung entscheidend sind (z.B. Abbildungsmaßstab, Pixelanzahl, etc.).

Das erfindungsgemäße Verfahren kann vorteilhaft so weitergebildet werden, dass der vorgegebene Mindestwert für das Erfassen der Zeitspanne höchstens 10%, bevorzugt höchstens 15%, besonders bevorzugt höchstens 20% relativ zu dem minimalen Bereich des Überwachungsbereiches beträgt.

Dadurch ist es ebenso möglich, das Verfahren auf verschiedene Düsen/- geometrien anzuwenden und über dem hinaus das Verfahren auf die jeweiligen Prozessparameter und Anforderungen (wie Qualität der Schweißung, etc.) an das Auftragschweißen anzupassen.

Die Erfindung soll anhand von Ausführungsbeispielen näher erläutert werden, es zeigen:
Fig. 1: ein Schema einer erfindungsgemäßen Vorrichtung zur Prozessüberwachung bei einem Auftragschweiß-Verfahren,
Fig. 1a: ein detailliertes Schema der Auswerteeinheit der erfindungsgemäßen Vorrichtung zur Prozessüberwachung bei einem Auftragschweiß-Verfahren nach Fig. 1,
Fig. 1b: einen Strahlenverlauf der erfindungsgemäßen Vorrichtung zur Prozessüberwachung bei einem Auftragschweiß-Verfahren nach Fig. 1,
Fig. 2: Querschnitt einer Düse mit durchgeleitetem Laserstrahl und Zufuhr des aufzutragenden Materials,
Fig. 3: ein Schema eines erfindungsgemäßen Verfahrens zur Prozessüberwachung bei einem Auftragschweiß-Verfahren,
Fig. 4: erfasstes Bild eines Auftragschweiß-Prozesses mit erfindungsgemäß festgelegtem Überwachungsbereich (links) und gleiches mit zusätzlich erkennbarer Anhaftung an der Düse (rechts).

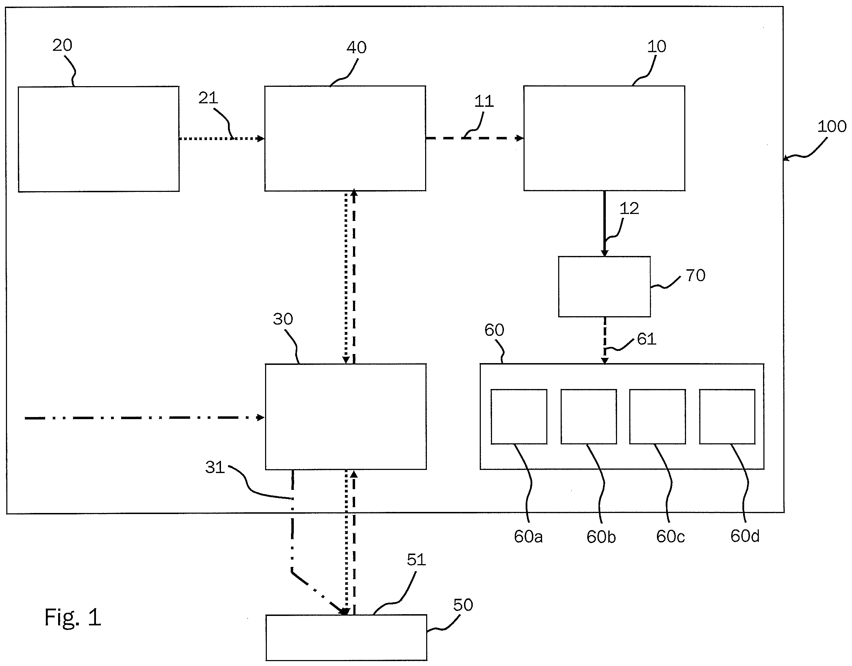

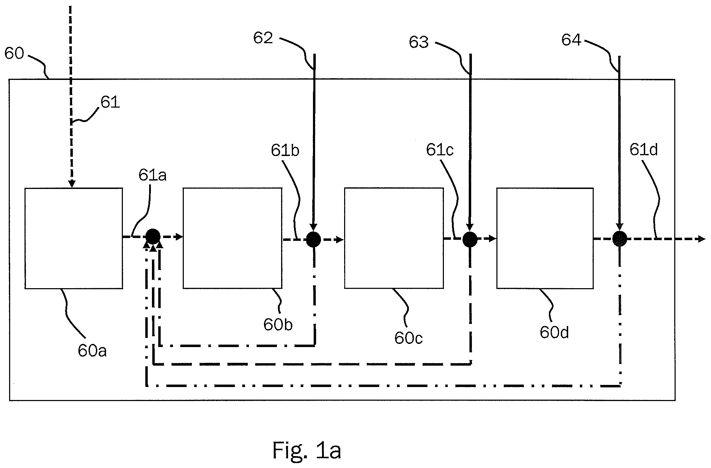

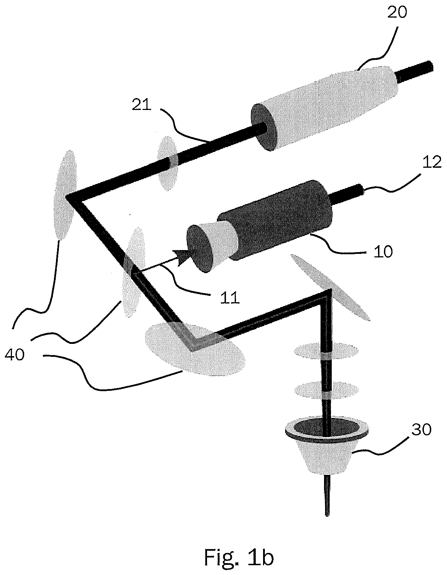

Fig. 1 zeigt eine schematische Darstellung eines Ausführungsbeispiels der Vorrichtung 100 zur Prozessüberwachung bei einem Auftragschweiß-Verfahren mit einem optischen Detektor 10, der optisch in einem Strahlengang eines Laserstrahls 21 eingebunden ist. Dieses kann vorteilhafterweise über einen Strahlteiler erfolgen wie in Fig. 1b zu sehen, der als Strahlteiler-Würfel oder als halbdurchlässiger Spiegel ausgebildet ist. Mittels dieser Anordnung kann der Laserstrahl 21, der von der Laserstrahl-Quelle 20 zum Werkstück 50 gelenkt wird und mittels diesem aufzutragendes Material 31 aufgeschmolzen werden kann, mit einem Detektorsignal 11 überlagert werden, das von der zu bearbeitenden Oberfläche 51 in entgegengesetzter Richtung zum Laserstrahl 21 an den optischen Detektor 10 gesendet wird. Es sind aber auch weitere Ausbildungsformen möglich, mittels derer der Laserstrahl und das Detektorsignal überlagert werden können.

Als Detektor 10 wird ein optischer Sensor-Chip verwendet, der unter anderem Infrarot-Wellenlängen erfassen kann. Sie bilden die Grundlage für das Erzeugen eines Bildes 61 mit temperaturabhängigen Intensitäten. Hierfür können grundsätzlich Kameras mit CCD- oder CMOS-Sensor verwendet werden. Sie wandeln das aufgenommene Detektorsignal 11 in ein elektrisches Detektorsignal 12 um, das an eine Auswerteinheit 60 gesendet wird.

In der Umwandlungseinheit 70 selbst wird dann das elektrische Detektorsignal 12 in das Bild 61 mit temperaturabhängigen Intensitäten umgewandelt und an die integrierten Einrichtungen 60a, 60b, 60c, 60d der Auswerteeinheit 60 zur weiteren Verarbeitung gesendet.

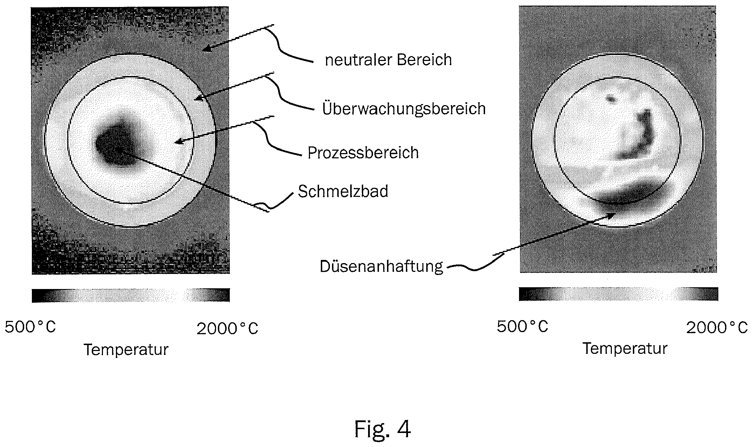

Ein solches Bild 61 kann grob in drei Bereiche eingeteilt werden, was besonders gut in Fig. 4 zu erkennen ist.

Der erste Bereich ist der Prozessbereich. Hier sind besonders hohe Intensitäten (hohe Temperaturen) im Bild 61 zu erwarten, da hier der Laserstrahl 21 auf die zu bearbeitende Oberfläche 51 des Werkstücks 50 trifft und somit ein besonders hoher Wärmeeintrag stattfindet. Dieser Bereich ist in Fig. 4 als innerster Bereich zu erkennen. Dieser wird für die Auswertung der Überwachung nach Düsenanhaftungen nicht verwendet.

Der zweite Bereich ist der Überwachungsbereich, der von der Einrichtung 60a, wie später noch näher erläutert, festgelegt und für die spätere Auswertung bezüglich der Überwachung auf Düsenanhaftungen verwendet wird. Dieser Bereich erstreckt sich am äußeren Rand des Prozessbereiches in einer, wie in diesem Ausführungsbeispiel in Fig. 4 gewählt, ringförmigen Art. Anders ausgedrückt heißt das, dass der Prozessbereich mit der Düsenöffnung in Relation gesetzt werden kann und sich daher der Überwachungsbereich entlang des Randes der Düsenöffnung erstreckt. Hier sollten in der Regel nur mittlere Intensitäten (mittlere Temperaturwerte) zu erwarten sein, da natürlich die Wärme, die durch den Laserstrahl 21 in das Werkstück 50 eingetragen wird, sich u.a. durch Wärmeleitung im Material ausbreitet.

Der dritte Bereich ist der neutrale Bereich. Dieser Bereich umfasst alles außerhalb des ersten und zweiten Bereiches, wie in Fig. 4 zu sehen ist. Hier sind bis auf wenige Artefakte, die zum Beispiel auf Reflektionen von der Düseninnenfläche herrühren, vergleichsweise niedrige Intensitäten (niedrige Temperaturen) zu erwarten. Dieser Bereich wird wie der erste Bereich von der Überwachung bezüglich Düsenanhaftungen ausgenommen.

Fig. 1a zeigt ein detailliertes Schema der erfindungsgemäßen Auswerteinheit, deren Einrichtungen anhand der folgenden Ausführungen näher erläutert werden soll.

Die Einrichtung 60a in Fig. 1a legt den Überwachungsbereich 61a fest, der für die weitere Auswertung bezüglich der Überwachung nach Düsenanhaftungen von Relevanz ist. Dabei kann der Überwachungsbereich eine Freiform oder geometrisch bekannte Formen wie die eines Kreisrings oder eines Rechteckrings annehmen. Auch die Größe der Form (wie zum Beispiel Durchmesser, Längsausdehnung usw.) können dabei variieren. Dies hängt von den jeweiligen Prozessparametern und der Geometrie der verwendeten Düse 30 ab, die später noch näher erläutert wird. Die Größe des minimalen Bereiches des Überwachungsbereiches 61a kann auch relativ zu einem Gesamtbereich, bestehend aus dem Überwachungsbereich 61a und dem Prozessbereich, beschrieben werden. Dabei haben sich Werte für den minimalen Bereich des Überwachungsbereiches 61a von mindestens 20% relativ zu dem Gesamtbereich als zweckmäßig herausgestellt.

Die Einrichtung 60b in Fig. 1a wird für das wiederholte Erfassen eines Flächenbereiches 61b des Überwachungsbereiches 61a verwendet. Dabei wird der Flächenbereich 61b erfasst, bei dem die Intensität einen vorgegebenen minimalen Wert 62 überschreitet. Die Erfassung selbst erfolgt aufgrund der Eigenschaften des optischen Sensor-Chips 10 pixelweise und umfasst die Größe des Flächenbereiches 61b, welche nach dem Erfassen ausgewertet wird.

Die Einrichtung 60c in Fig. 1a dient zum Erfassen einer Zeitspanne 61c, während derer der von der Einrichtung 60b erfasste Flächenbereich 61b über einem vorgegebenen Mindestwert 63 liegt. Das bedeutet, dass neben dem Erfassen der Intensität und der Flächengröße, bei Überschreitung der Intensitätsgrenze (vorgegebener minimaler Wert) 62, die Zeit des Bestehens dieses erfassten Flächenbereiches 61b stattfindet, wenn neben der Intensitätsgrenze (vorgegebener minimaler Wert) 62 auch eine Grenze 63 der Flächengröße überschritten wurde. Dies ist das dritte Kriterium bei der Überwachung des Bildes 61. Das Festgelegen des Grenzwertes 63 kann auch relativ zu dem minimalen Bereich des Überwachungsbereiches 61a erfolgen. Dabei haben sich Werte von höchstens 10% relativ zu dem minimalen Bereich des Überwachungsbereiches 61a als zweckmäßig herausgestellt.

Die Einrichtung 60d in Fig. 1a dient zum Abbrechen des Prozesses des Auftragschweißens, falls die Zeitspanne 61c des erfassten Flächenbereiches 61b über einem vorgegebenen Zeitwert 64 liegt. Wird also nun noch das dritte Kriterium bei der Überwachung des Bildes 61 überschritten, ist die Gefahr groß, dass es sich bei der erfassten Fläche 61b um eine größere Anhaftung an aufgeschmolzenem Material am Rand der Düse 30 handelt. Aufgrund dessen wird der Prozess gestoppt.

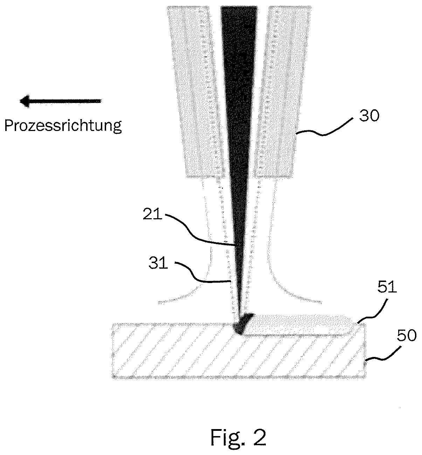

Eine weitere vorteilhafte Ausgestaltung der Vorrichtung 100 zur Prozessüberwachung bei einem Auftragschweiß-Verfahren ist in Fig. 2 gezeigt. Hier wird das aufzutragende Material 31 über die Düse 30 fokussierend auf die zu bearbeitende Oberfläche 51 des Werkstücks 50 geleitet. Hierdurch können der Fokus des aufzutragenden Materials 31 und der Fokus des Laserstrahls 21 zusammengebracht werden, was eine besonders effektive Verarbeitung des zugeführten Materials 31 zur Folge hat. Auch können hierdurch feinere Strukturen beim Auftragen erzeugt werden.

Zusätzlich kann die Vorrichtung 100 zur Prozessüberwachung bei einem Auftragschweiß-Verfahren dadurch vorteilhaft weitergebildet werden, wie in Fig. 2 zu sehen, dass der Laserstrahl 21 durch einen mittleren Bereich der Düse 30 hindurch auf die zu bearbeitende Oberfläche 51 des Werkstücks 50 gelenkt wird. Eine überaus kompakte Bauweise des Prozesskopfes ist dadurch möglich, was bei schwer zugänglichen Bereichen des Werkstücks 50 von Vorteil ist.

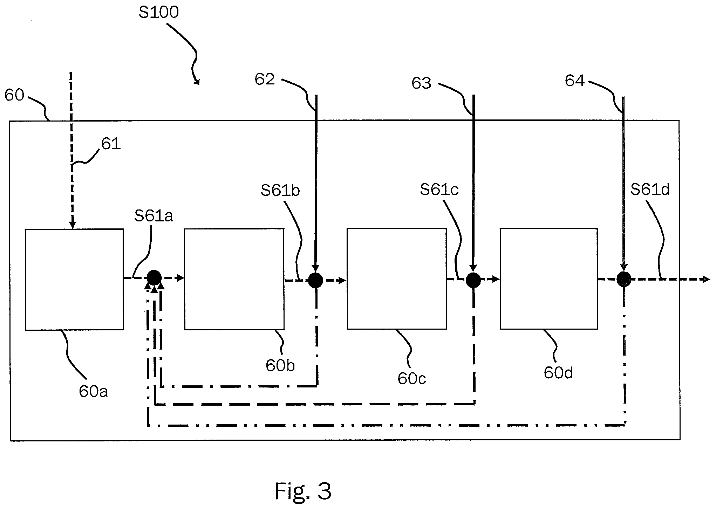

In Fig. 3 ist ein Schema eines Ausführungsbespiels eines erfindungsgemäßen Verfahrens zur Prozessüberwachung bei einem Auftragschweiß-Verfahren gezeigt. Hierbei sind im speziellen die Verfahrensschritte der Auswerteinheit 60 dargestellt.

Im Schritt S60a wird ein Überwachungsbereich 61a des Bildes 61 festgelegt. Dieser Überwachungsbereich begrenzt das Bild auf den für die Auswertung relevanten Bereich. Dabei haben sich Werte für den minimalen Bereich des Überwachungsbereiches 61a von mindestens 20% relativ zu dem Gesamtbereich, bestehend aus dem Überwachungsbereich 61a und dem Prozessbereich, als zweckmäßig herausgestellt.

Im Schritt S60b wird ein Flächenbereich 61b des Überwachungsbereiches 61a wiederholt erfasst, in dem die Intensität einen vorgegebenen minimalen Wert 62 überschreitet. Innerhalb des für die Auswertung relevanten Überwachungsbereiches wird nach Flächen gesucht bzw. diese erfasst, die eine vorher festgelegte Intensitätsgrenze überschreiten, und begonnen, ihre Flächengröße pixelweise zu erfassen.

Im Schritt S60c wird eine Zeitspanne erfasst, während derer der erfasste Flächenbereich 61b über einem vorbestimmten Grenzwert 63 liegt. Nun wird bei der pixelweisen Erfassung der Flächengröße geschaut, ob eine Fläche, die sowohl zusammenhängend als auch aufsummiert sein kann, einen vorher festgelegten Grenzwert 63 an Pixeln überschreitet. Alternativ kann das Festgelegen des Grenzwertes 63 auch relativ zu dem minimalen Bereich des Überwachungsbereiches erfolgen. Ist dies der Fall, wird die Zeit des Bestehens dieser Fläche erfasst und es kommt zum nächsten Schritt (S60d).

Schritt S60d bricht den Prozess des Auftragschweißens in dem Fall ab, in dem die Zeitspanne des erfassten Flächenbereiches 61b über einem vorgegebenen Zeitwert 64 liegt. Überschreitet nun auch die erfasste Zeit der Fläche, die die Intensitätsgrenze (vorgegebener minimaler Wert) 62 und die Grenze 63 der Größe der Fläche überschreitet, eine Zeitgrenze 64, so wird der Prozess des Auftragschweißens abgebrochen, da mit einer größeren Anhaftung an aufgeschmolzenem Material am Rand der Düse 30 gerechnet werden muss.

Dabei kann für die Wahl der Grenze 64 der Zeit eine Zeitspanne von vorzugsweise 1 Sekunde oder von 3 Sekunden gewählt werden. Überdies hinaus hat sich in stochastischen Versuchen eine Zeitspanne von 5 Sekunden als besonders geeignet herausgestellt, da teilweise bei zu kurzer Zeitspanne der Prozess abgebrochen wurde, obwohl die Düsenanhaftung im Begriff war, sich so zu verändern, dass es den Prozess des Auftragschweißens nicht weiter beeinflusst hätte.

Für die Festlegung der Grenze 63 der Größe des erfassten Flächenbereiches 61b haben sich, je nach Geometrie der Düse sowie des Abbildungsmaßstabs und weiterer Faktoren, die für die Bildverarbeitung entscheidend sind, mindestens 10% relativ zu dem minimalen Bereich des Überwachungsbereiches 61a als zweckmäßig herausgestellt. Hierbei konnte auf die verschiedenen Eigenschaften der Düse eingegangen werden und die Anforderungen an z.B. Qualität der Schweißung berücksichtigt werden.

## Patentansprüche

1. Vorrichtung (100) zur Prozessüberwachung bei einem Auftragschweiß-Verfahren mit:
einem optischen Detektor (10), der optisch in einem Strahlengang eines Laserstrahls (21) eingebunden ist, wobei der Laserstrahl (21) zum Aufschmelzen von aufzutragendem Material (31) von einer Laserstrahl-Quelle (20) gerichtet ausgesendet, über ein optisches System (40) auf ein Werkstück (50) gelenkt und dabei auf eine zu bearbeitende Oberfläche (51) des Werkstücks (50) fokussiert wird, und das optische System (40) dazu eingerichtet ist, ein von der Temperatur des Werkstücks und der Düsengeometrie abhängiges Detektorsignal (11) in entgegengesetzter Richtung zum Laserstrahl (21) an den optischen Detektor (10) zu senden, das von dem optischen Detektor (10) aufgenommen und in ein elektrisches Detektorsignal (12) umgewandelt wird,
einer Umwandlungseinheit (70), die das elektrische Detektorsignal (12) in ein Bild (61) umwandelt, das eine temperaturabhängige Intensitätsverteilung des von dem optischen Detektor (10) aufgenommenen Detektorsignals (11) wiedergibt, und
einer Auswerteeinheit (60), die eingerichtet ist, das Bild (61) weiter zu verarbeiten,
wobei die Auswerteeinheit (60) dafür ferner folgendes aufweist:
eine Einrichtung (60a) zum Festlegen eines Überwachungsbereiches (61a) des Bildes (61),
eine Einrichtung (60b) zum wiederholten Erfassen eines Flächenbereiches (61b) des Überwachungsbereiches (61a), in dem die Intensität einen vorgegebenen minimalen Wert (62) überschreitet,
**gekennzeichnet durch**
eine Einrichtung (60c) zum Erfassen einer Zeitspanne (61c), während derer der erfasste Flächenbereich (61b) über einem vorgegebenen Mindestwert (63) liegt, und
eine Einrichtung (60d) zum Abbrechen des Prozesses des Auftragschweißens, falls die Zeitspanne (61c) des erfassten Flächenbereiches (61b) über einem vorgegebenen Zeitwert (64) liegt.

2. Vorrichtung (100) zur Prozessüberwachung bei einem Auftragschweiß-Verfahren nach Anspruch 1, wobei die Einrichtung (60d) zum Abbrechen des Prozesses des Auftragschweißens dazu eingerichtet ist, den Prozess des Auftragschweißens automatisiert abzubrechen, falls die Zeitspanne (61c) des erfassten Flächenbereiches (61b) über einem vorgegebenen Zeitwert (64) liegt.

3. Vorrichtung (100) zur Prozessüberwachung bei einem Auftragschweiß-Verfahren nach Anspruch 1 oder 2, wobei die Vorrichtung dazu eingerichtet ist, das aufzutragende Material (31) über eine Düse (30) fokussierend auf die zu bearbeitende Oberfläche (51) des Werkstücks (50) zu leiten.

4. Vorrichtung (100) zur Prozessüberwachung bei einem Auftragschweiß-Verfahren nach Anspruch 3, wobei die Vorrichtung dazu eingerichtet ist, den Laserstrahl (21) durch einen mittleren Bereich der Düse (30) hindurch auf die zu bearbeitende Oberfläche (51) des Werkstücks (50) zu lenken.

5. Verfahren (S100) zur Prozessüberwachung bei einem Auftragschweiß-Verfahren, unter Verwendung eines optischen Gesamtsystems mit einem optischen Detektor (10), der optisch in einem Strahlengang eines Laserstrahls (21) eingebunden ist, und einer Laserstrahl-Quelle (20), die den Laserstrahl (21) zum Aufschmelzen von aufzutragendem Material (31) von einer Laserstrahl-Quelle (20) gerichtet aussendet, über ein optisches System (40) auf ein Werkstück (50) lenkt und dabei auf eine zu bearbeitende Oberfläche (51) des Werkstücks (50) fokussiert, und das optische System (40) dazu eingerichtet ist, ein von der Temperatur des Werkstücks und der Düsengeometrie abhängiges Detektorsignal (11) in entgegengesetzter Richtung zum Laserstrahl (21) an den optischen Detektor (10) zu senden, das von dem optischen Detektor (10) aufgenommen und in ein elektrisches Detektorsignal (12) umgewandelt wird, und
einer Umwandlungseinheit (70), die das elektrische Detektorsignal (12) in ein Bild (61) umwandelt, das eine temperaturabhängige Intensitätsverteilung des von dem optischen Detektor (10) aufgenommenen Detektorsignals (11) wiedergibt,
wobei das Verfahren folgende Schritte aufweist:
Festlegen (S60a) eines Überwachungsbereiches (61a) des Bildes (61),
wiederholtes Erfassen (S60b) eines Flächenbereiches (61b) des Überwachungsbereiches (61a), in dem die Intensität einen vorgegebenen minimalen Wert (62) überschreitet,
**gekennzeichnet durch** die weiteren Schritte
Erfassen (S60c) einer Zeitspanne (61c), während derer der erfasste Flächenbereich (61b) über einem vorgegebenen Mindestwert (63) liegt, und
Abbrechen (S60d) des Prozesses des Auftragschweißens, falls die Zeitspanne (61c) des erfassten Flächenbereiches (61b) über einem vorgegebenen Zeitwert (64) liegt.

6. Verfahren (S100) zur Prozessüberwachung bei einem Auftragschweiß-Verfahren nach Anspruch 5, wobei eine Mindestgröße des Überwachungsbereiches (61a) derart festgelegt wird, dass sie mindestens 20% relativ zu einem durch die Düsengeometrie vorbestimmten Gesamtbereich, bestehend aus dem Überwachungsbereich (61a) und einem Prozessbereich, beträgt.

7. Verfahren (S100) zur Prozessüberwachung bei einem Auftragschweiß-Verfahren nach Anspruch 6, wobei der vorgegebene Mindestwert (63) des erfassten Flächenbereiches (61b) für das Erfassen (S60c) einer Zeitspanne (61c) 10% relativ zu der Größe des Überwachungsbereiches (61a) beträgt.

## Claims

1. A device (100) for process monitoring in a deposition welding method, comprising:
an optical detector (10) optically incorporated into a beam path of a laser beam (21), wherein said laser beam (21) is emitted from a laser-beam source (20) in a directed manner in order to melt material (31) to be deposited, is guided via an optical system (40) onto a workpiece (50) and is thereby focused onto a surface (51) of said workpiece (50) to be processed, and said optical system (40) is configured to transmit a detector signal (11) dependent on the temperature of said workpiece and the nozzle geometry in the direction opposing said laser beam (21) to said optical detector (10), said signal being detected by said optical detector (10) and converted into an electrical detector signal (12),
a conversion unit (70) converting said electrical detector signal (12) to an image (61) that reproduces a temperature-dependent intensity distribution of said detector signal (11) detected by said optical detector (10), and
an evaluation unit (60) configured up to further process said image (61),
wherein, for this purpose, said evaluation unit (60) further comprises:
a means (60a) for determining a monitoring region (61a) of said image (61),
a means (60b) for repeatedly detecting a surface region (61b) of said monitoring region (61a) in which the intensity exceeds a specified minimum value (62),
**characterized by**
a means (60c) for detecting a time period (61c) during which the detected surface region (61b) is greater than a specified minimum value (63), and
a means (60d) for stopping said deposition welding process if said time period (61c) of said detected surface region (61b) is greater than a specified time value (64).

2. The device (100) for process monitoring in a deposition welding method according to claim 1, wherein said means (60d) for stopping the deposition welding process is configured to stop said deposition welding process in an automated manner if said time period (61c) of said detected surface region (61b) is greater than a specified time value (64).

3. The device (100) for process monitoring in a deposition welding method according to claim 1, wherein said device is configured to guide said material (31) to be deposited via a nozzle (30) onto said surface (51) of said workpiece (50) to be processed in a focusing manner.

4. The device (100) for process monitoring in a deposition welding method according to claim 3, wherein said device is configured to guide said laser beam (21) through a middle region of said nozzle (30) onto said surface (51) of said workpiece (50) to be processed.

5. A method (S100) for process monitoring in a deposition welding method using an overall optical system comprising an optical detector (10) optically incorporated into a beam path of a laser beam (21), wherein said laser beam (21) is emitted from a laser-beam source (20) in a directed manner in order to melt material (31) to be deposited, is guided via an optical system (40) onto a workpiece (50) and is thereby focused onto a surface (51) of said workpiece (50) to be processed, and said optical system (40) is configured to transmit a detector signal (11) dependent on the temperature of said workpiece and the nozzle geometry in the direction opposing said laser beam (21) to said optical detector (10), said signal being detected by said optical detector (10) and converted into an electrical detector signal (12),
a conversion unit (70) converting said electrical detector signal (12) to an image (61) that reproduces a temperature-dependent intensity distribution of said detector signal (11) detected by said optical detector (10),
wherein said method comprises the following steps:
determining (S60a) a monitoring region (61a) of said image (61),
repeatedly detecting (S60b) a surface region (61b) of said monitoring region (61a) in which the intensity exceeds a specified minimum value (62),
**characterized by** the further steps of
detecting (S60c) time period (61c) during which said detected surface region (61b) is greater than a specified minimum value (63), and
stopping (S60d) said deposition welding process if said time period (61c) of said detected surface region (61b) is greater than a specified time value (64).

6. The method (S100) for process monitoring in a deposition welding method according to claim 5, wherein a minimum size of said monitoring region (61a) is determined such that it is at least 20 % relative to an overall region predetermined by the nozzle geometry consisting of said monitoring region (61a) and a process region.

7. The method (S100) for process monitoring in a deposition welding method according to claim 6, wherein said specified minimum value (63) of said detected surface region (61b) for detecting (S60c) a time period (61c) is 10 % relative to the size of said monitoring region (61a).

## Revendications

1. Dispositif (100) de surveillance de processus pour un procédé de soudage par rechargement avec :
un détecteur optique (10), qui est intégré optiquement dans un trajet optique d'un faisceau laser (21), dans lequel le faisceau laser (21), pour la fusion du matériau (31) à appliquer, est envoyé de manière orientée à partir d'une source de faisceau laser (20), dirigé sur une pièce (50) par l'intermédiaire d'un système optique (40) et ce faisant focalisé sur une surface (51) à usiner de la pièce (50), et le système optique (40) est conçu pour envoyer au détecteur optique (10) un signal de détecteur (11) dépendant de la température de la pièce et de la géométrie de buse dans la direction opposée au faisceau laser (21), qui est reçu par le détecteur optique (10) et converti en un signal de détecteur électrique (12),
une unité de conversion (70), qui convertit le signal de détecteur électrique (12) en une image (61), qui reproduit une distribution d'intensité, dépendante de la température, du signal de détecteur (11) reçu par le détecteur optique (10), et
une unité d'évaluation (60), qui est conçue pour retraiter l'image (61),
dans lequel l'unité d'évaluation (60) présente en outre ce qui suit :
un système (60a) destiné à définir une zone de surveillance (61a) de l'image (61),
un système (60b) destiné à détecter à plusieurs reprises une zone de surface (61b) de la zone de surveillance (61a) dans laquelle l'intensité dépasse une valeur minimale (62) prédéfinie,
**caractérisé par**
un système (60c) destiné à détecter un laps de temps (61c) pendant lequel la zone de surface (61b) détectée se situe au-dessus d'une valeur minimale (63) prédéfinie, et
un système (60d) destiné à interrompre le processus de soudage par rechargement, au cas où le laps de temps (61c) de la zone de surface (61b) détectée se situerait au-dessus d'une valeur de temps (64) prédéfinie.

2. Dispositif (100) de surveillance de processus pour un procédé de soudage par rechargement selon la revendication 1, dans lequel le système (60d) destiné à interrompre le processus de soudage par rechargement est conçu pour interrompre le processus de soudage par rechargement de manière automatisée, au cas où le laps de temps (61c) de la zone de surface (61b) détectée se situerait au-dessus d'une valeur de temps (64) prédéfinie.

3. Dispositif (100) de surveillance de processus pour un procédé de soudage par rechargement selon la revendication 1 ou 2, dans lequel le dispositif est conçu pour guider le matériau (31) à appliquer par l'intermédiaire d'une buse (30) par focalisation sur la surface (51) à usiner de la pièce (50).

4. Dispositif (100) de surveillance de processus pour un procédé de soudage par rechargement selon la revendication 3, dans lequel le dispositif est conçu pour guider le faisceau laser (21) à travers une zone centrale de la buse (30) sur la surface (51) à usiner de la pièce (50).

5. Procédé (S100) de surveillance de processus pour un procédé de soudage par rechargement, au moyen d'un système total optique avec un détecteur optique (10), qui est intégré optiquement dans un trajet optique d'un faisceau laser (21), et une source de faisceau laser (20), qui envoie de manière orientée le faisceau laser (21) à partir d'une source de faisceau laser (20) pour la fusion du matériau (31) à appliquer, le dirige sur une pièce (50) par l'intermédiaire d'un système optique (40) et ce faisant le focalise sur une surface (51) à usiner de la pièce (50), et le système optique (40) est conçu pour envoyer au détecteur optique (10) un signal de détecteur (11) dépendant de la température de la pièce et de la géométrie de buse dans la direction opposée au faisceau laser (21), qui est reçu par le détecteur optique (10) et converti en un signal de détecteur électrique (12),
une unité de conversion (70), qui convertit le signal de détecteur électrique (12) en une image (61), qui reproduit une distribution d'intensité, dépendante de la température, du signal de détecteur (12) reçu par le détecteur optique (10),
dans lequel le procédé présente les étapes suivantes :
la définition (S60a) d'une zone de surveillance (61a) de l'image (61),
la détection (S60b) à plusieurs reprises d'une zone de surface (61b) de la zone de surveillance (61a), dans laquelle l'intensité dépasse une valeur minimale (62) prédéfinie,
**caractérisé par** les autres étapes
de détection (S60c) d'un laps de temps (61c) pendant lequel la zone de surface (61b) détectée se situe au-dessus d'une valeur minimale (63) prédéfinie, et
d'interruption (S60d) du processus de soudage par rechargement, au cas où le laps de temps (61c) de la zone de surface (61b) détectée se situerait au-dessus d'une valeur de temps (64) prédéfinie.

6. Procédé (S100) de surveillance de processus pour un procédé de soudage par rechargement selon la revendication 5, dans lequel une grandeur minimale de la zone de surveillance (61a) est définie de telle sorte qu'elle est égale à au moins 20 % par rapport à une zone totale prédéfinie par la géométrie de buse, constituée de la zone de surveillance (61a) et d'une zone de processus.

7. Procédé (S100) de surveillance de processus pour un procédé de soudage par rechargement selon la revendication 6, dans lequel la valeur minimale (63) prédéfinie de la zone de surface (61b) détectée pour la détection (S60c) d'un laps de temps (61c) atteint 10% par rapport à la grandeur de la zone de surveillance (61a).
